# EUROPÄISCHE PATENTSCHRIFT

(11) **EP 1 400 458 B1**
(45) Veröffentlichungstag und Bekanntmachung des Hinweises auf die Patenterteilung: **22.11.2006**
(21) Anmeldenummer: 03018445.1
(22) Anmeldetag: 05.04.2001
(51) Int. Cl.: B65D 51/00, B29C 45/00

(54) **Für pharmazeutische Anwendungen dienender Spritzling**
Injection moulded part for pharmaceutical use
Pièce moulée par injection pour usage pharmaceutique

(30) Priorität: 06.04.2000 DE 10016961; 10.03.2001 DE 10111550
(43) Veröffentlichungstag der Anmeldung: 24.03.2004
(62) Teilanmeldung aus: 01923713.0
(73) Patentinhaber: MARO b.v., 4703 RJ Roosendaal (NL)
(72) Erfinder: Claessens, Albert, Louis, Victor, Jozef, 3530 Houthalen (BE)
(74) Vertreter: Müller, Enno

(56) Entgegenhaltungen:
- EP-A- 0 834 457
- EP-A- 0 873 841
- WO-A-94/15850
- WO-A-97/29151
- WO-A-98/36986
- DE-C- 4 309 738
- US-A- 4 306 852
- US-A- 5 678 713

## Beschreibung

Die Erfindung bezieht sich auf einen für eine pharmazeutische Anwendung dienenden Spritzling wie einen Verschlussstopfen für pharmazeutische Flaschen, eine Schutzkappe für medizinische Spritzen oder ein Dichtungselement für ein pharmazeutisches Behältnis.

Spritzlinge dieser Art weisen nicht selten ästhetische Fehler auf. Solche, das optische Erscheinungsbild beeinträchtigende Unregelmäßigkeiten können in Form von Fließzungenrändern auftreten und bilden sich vornehmlich auch im Bereich des Anspritzpunktes aus. Man ist daher bereits dazu übergegangen, bei Verschlussstopfen etwa, den Anspritzpunkt in einer Verdecktlage, beispielsweise in einem Höhlungsbereich eines Verschlussstopfens, anzuordnen. Eine solche Anordnung ist aber mit Schwierigkeiten verbunden, da auch die Düse der Spritzvorrichtung einen gewissen Raumbedarf hat. Fließfehler an Abdichtungsstellen, beispielsweise an einem flanschartigen Randbereich eines solchen Verschlussstopfens, dem Stirnrand der Flansche zugewandt, können sogar Dichtungsprobleme verursachen.

Darüber hinaus werden an derartige Spritzlinge auch hohe sonstige technische Anforderungen gestellt. So darf es beim Durchstechen möglichst nicht zum Abbröckeln von Materialteilen, die mitgerissen werden könnten, kommen. Auch muss ein Durchstechen behinderungsfrei möglich sein. Im Fall von Schutzkappen wird etwa auch ein guter Materialzusammenhalt, der etwa auch bei den anderen Ausführungen des Spritzlings wesentlich ist, gefordert.

Hiervon ausgehend beschäftigt sich die Erfindung mit der Aufgabe, einen für pharmazeutische Anwendungen geeigneten, möglichst homogenen und möglichst fehlerfreien Spritzling anzugeben.

Die Aufgabe ist mit dem Gegenstand des Anspruchs 1 gelöst, wobei ergänzend zu den bereits angegebenen Merkmalen von Bedeutung ist, dass der Spritzling zumindest in einem Teilbereich aus einem thermoplastischen Elastomerkunststoff mit einem mineralischen Füllstoffanteil von 30 % oder mehr besteht und dieser Teilbereich einen Heißkanal-Anspritzpunkt aufweist, der als glattflächiger Abdruck gebildet ist. Darüber hinaus, Anspruch 2, ist auch von Bedeutung, dass im Falle eines zweiten Teils des Spritzlings dieser aus einem anderen Kunststoff besteht, insbesondere einem herkömmlichen Spritz-Kunststoff wie PP, PE oder dergleichen, mit welchem dann der Anspritzpunkt des ersten Teilbereichs überspritzt ist. In einem solchen Fall kann dann insbesondere auch der Anspritzpunkt des aus dem elastischen Elastomerkunststoff gebildeten Teilbereichs als Heißkanal-Anspritzpunkt gebildet sein, der dann auch weiter vorzugsweise als glattflächiger Abdruck ausgebildet ist. Erfindungsgemäß ist erkannt worden, dass den Materialanforderungen derartiger pharmazeutischer Spritzlinge ein thermoplastischer Elastomerkunststoff mit einem mineralischen Füllstoffanteil von 30 % oder mehr gerecht wird. Dies dann, wenn jedenfalls im Falle des Freiliegens nach außen an dem Spritzling der Anspritzpunkt durch einen Heißkanal-Anspritzpunkt gebildet ist und ein glattflächiger Abdruck geschaffen ist. Störende Schlieren oder Materialunebenheiten, insbesondere im Bereich des Anspritzpunktes, können nicht mehr festgestellt werden. Gleichwohl ist ein solcher Spritzling mit üblichen Kunststoffspritzverfahren, jedoch Heißkanal-Anspritzung, rationell herstellbar. Bevorzugt ist in diesem Zusammenhang, dass der Abdruck, der durch den Heißkanal-Anspritzpunkt an dem Spritzling geschaffen ist, ohne Versetzung nach außen in die ihn umgebende Spritzlingswandung übergeht. Insbesondere ist bevorzugt, dass der glattflächige Abdruck ebenengleich in die ihn umgebende Spritzlingswandung übergeht. Im Weiteren kann sich aber auch in besonderen Fällen empfehlen, dass der Abdruck gegenüber der ihn umgebenden Spritzlingswandung erhaben ist, also nach außen versetzt ist. Dies bspw., wenn, worauf auch der zuvor erläuterte Anspruch 2 abzielt, im Zweikomponenten-spritzverfahren gearbeitet wird oder der aus dem Elastomerkunststoff bestehende Spritzling Teil eines mehrteiligen Gegenstandes ist, bei welchem der Anspritzpunkt von einem weiteren Teil überdeckt oder darin gar gefangen ist. Denn ein erhabener Abdruck kann sich auch für eine formschlüssige Aufnahme in einem weiteren Teil empfehlen.

Der Spritzling kann insgesamt mehrteilig dadurch sein, dass er etwa im Mehrkomponentenspritzverfahren hergestellt ist, wobei die Einzelteile unmittelbar nach Art einer Verschweißung aneinander haften können, oder aber auch voneinander trennbar oder getrennt sich nach Vollendung des Spritzvorganges vorfinden. In einem solchen mehrteiligen Spritzling, wie er weiter unten noch im Einzelnen beschrieben ist, ist dann der aus thermoplastischem Elastomerkunststoff bestehende Teil ein Teilbereich desselben.

Im Weiteren ist auch bevorzugt, dass ein solcher Spritzling, bzw. der entsprechende Teilbereich des Spritzlings, jedenfalls im Bereich des Anspritzpunktes, dickwandig ausgebildet ist. Dickwandigkeit ist hierbei insbesondere im Hinblick auf eine Länge des Fließweges des eingespritzten Materiales zu der Wandstärke verstanden. Es wird die Länge vom Einspritzpunkt ab gemessen. Als Wandstärke ist hierbei weiter ein Mittelwert über den gesamten Spritzling eingesetzt. Wenn sich ein Wert < 5 ergibt, ist Dickwandigkeit im Sinne vorliegender Anmeldung gegeben.

Der Spritzling, bzw. der entsprechende Teilbereich des Spritzlings, liegt als homogener Körper vor. Die angegebene Mischung erbringt eine gummielastische Struktur mit gutem Durchstechverhalten. Auch den Anforderungen an ein Nachdichten, etwa bei herausgezogener Kanüle, ist genügt.

Der beigegebene mineralische Füllstoff-Anteil wirkt fließbremsend, was eine erstrebte gleichmäßige Verteilung des Kunststoffes im Zuge des Spritzvorganges vorteilhaft unterstützt. Die Heißkanal-Anspritzung, die vorzugsweise auch in einem zentralen Bereich, weiter vorzugsweise auch an einer Außenfläche, also nicht in einem Höhlungsbereich des Spritzlings, vorgenommen ist, begünstigt gleichfalls eine ausgewogene Verteilung des Kunststoffes im Zuge eines Spritzgussvorganges. Die überwiegend dickwandige Ausbildung des Spritzlings, bzw. der entsprechende Teilbereich des Spritzlings, führt auch zu im Wesentlichen gleichen Verhältnis bezüglich eines, wenn auch bei dem angegebenen Werkstoff vergleichsweise sehr geringen Schrumpfverhaltens. Der Füllstoff ist vorzugsweise ein Silikat. Es kann sich beispielsweise um Magnesiumsilikat (Talg) handeln. Dieser Füllstoff wirkt sich im Sinne einer vorteilhaften Fließhemmung aus. Gleichwohl geschieht die Füllung eines entsprechenden Formnestes absolut gesehen sehr rasch. Bei der üblichen Größenordnung etwa hier betroffener Verschlussstopfen oder sonstiger Gegenstände vergleichbarer Größenordnung beträgt die Füllzeit ca. 0,1 Sekunde. Es ist zudem bezüglichen des beschriebenen thermoplastischen Elastomerkunststoffes, dem gegebenenfalls noch ein Weichmacher beigegeben ist, eine überraschend geringe Abhängigkeit seiner Eigenschaften von der Temperatur gegeben. Die Füllung einer Kavität lässt sich weitestgehend unabhängig von der Fülltemperatur ohne Auftreten eines sogenannten Spagetti-Effektes erreichen. Die Shore-Härte A liegt zwischen 45 und 60, bevorzugt bei 55.

Konkreter bezüglich eines hier betroffenen Verschlussstopfens ist im Hinblick auf eine gute Penetrierbarkeit mit der Kanüle einer Spritze vorgesehen, dass die Stopfendecke einen zentralen Bereich geringerer Wandstärke und einen Randbereich größerer Wandstärke, gemessen in Vertikalrichtung, aufweist. Der Randbereich ist im Anwendungsfall von einer Bördelkappe entsprechender Infusionsflaschen-Sicherung umfasst, gegebenenfalls unter Spannwirkung.

An die Verschlussdecke schließt sich nach unten in Vertikalrichtung ein Stopfenkragen an. Dieser Stopfenkragen weist gleichfalls bevorzugt jedenfalls in seinem anfänglichen, an die Stopfendecke anschließenden, Bereich eine größere Wandstärke auf als die Stopfendecke in ihrem zentralen Bereich. Zugleich schließt damit der Stopfenkragen bevorzugt an den Bereich größerer Wandstärken des Randbereichs des Verschlussstopfens an. Weiter ist bevorzugt, dass die Heißkanal-Anspritzung hinsichtlich des Spritzkanal-Verschlusses mit einem stempelartigen Nadelkopf vorgenommen ist, wobei die ebenflächige Stirnfläche des Nadelkopfes im Verschlusszustand der Spritzgießform ebenengleich in die die Spritzlingswandung mitbildende, umgebende Düsenwandung übergeht. Entsprechend lässt sich auch formulieren, dass der glattflächige Anspritzpunkt, das heißt, die Angussfläche, ebenengleich in die umgebende Spritzlingsfläche übergeht. Es ergibt sich ein glattflächiger Abdruck des stempelartigen Nadelkopfes am Spritzling, wobei wirksam selbst kleinste Rauhungen oder Zerklüftungen vermieden sind. Der Spritzling ist nacharbeitungsfrei hergestellt. Die genannte Ausgestaltung hat im Falle des Verschlussstopfens den besonderen Vorteil, dass durch die Kanüle keinerlei etwa durch Ungenauigkeiten hervorgehobene Fraktionierungspartikel abgetragen werden können und in die Flasche gelangen können. Die formvollendete glatte Fläche besteht somit auch und insbesondere bezüglich des etwa stecknadelkopfgroßen Anspritzpunktes selbst.

Eine weitere Ausführungsform eines solchen Spritzlings für pharmazeutische Anwendungen ist eine Schutzkappe für medizinische Spritzen. Diese Schutzkappe wird über die Kanüle einer Spritze gesteckt, um diese hinsichtlich mechanischer Beeinträchtigungen oder auch Verschmutzungen zu schützen. Entsprechend besteht auch eine solche Schutzkappe aus einem thermoplastischen Elastomerkunststoff, der einen mineralischen Füllstoffanteil von 30 % oder mehr aufweist. Es ist eine Heißkanal-Anspritzung im Bereich eines Kappenhutes der Schutzkappe gegeben. Hier werden die gleichen Eigenschaften erreicht, insbesondere hinsichtlich des Äußeren der Schutzkappe, die zuvor auch in Bezug auf den Verschlussstopfen erläutert worden sind. Auch der als Schutzkappe ausgebildete Spritzling kann hinsichtlich des Werkstoffes einen Anteil an Weichmacher enthalten. Die Heißkanal-Anspritzung ist auch hier bevorzugt zentral, im Bereich der Kappenhut-Spitze, vorgenommen. Auch bezüglich der Schutzkappe trifft damit die Erläuterung zu, wie sie zuvor im Einzelnen hinsichtlich des stempelartigen Nadelkopfes, der bevorzugt spritzgießmaschinenseitig eingesetzt wird, und der hiermit erreichten Vorteile gegeben ist.

Ein weiterer Gegenstand, der durch einen solchen, für pharmazeutische Anwendungen dienenden Spritzling verkörpert sein kann, ist ein Dichtungselement, wie es bei sogenannten "Bottle-Pack"-Flaschen zur Anwendung kommt. Diesbezüglich ist u.a. auf den Offenbarungsgehalt der Deutschen Patentanmeldungen 195 00 460 und 196 20 196 verwiesen. Ein solches Dichtungselement besitzt gewöhnlich einen umlaufenden Flansch geringerer Wandstärke oder ober- und/oder unterseitig eine dem Rand zugeordnete umlaufende Nut und einen mittleren Bereich großer Wandstärke. Auch hier erfolgt die Anspritzung vorzugsweise zentral in der oberen Außenfläche. Im Übrigen treffen auch hier die beschriebenen geometrischen Merkmale, etwa hinsichtlich der Dickwandigkeit, und die Merkmale hinsichtlich der Reinheit und Schlierenfreiheit zu, wie sie zuvor im Bezug auf den Spritzling allgemein und die weiteren Anwendungsfälle bereits erläutert sind. Insbesondere kann ein solcher Gegenstand auch im Mehrkomponenten-Spritzverfahren hergestellt sein, wobei dann der eine Teilbereich, etwa der die Außenkappe bildende Teilbereich aus Hartkunststoff, die Form bildet (wiederum zumindest teilweise) für den nachträglich gespritzten Elastomerkunststoff-Teilbereich. Es kann aber auch umgekehrt vorgegangen werden. Besonders in letzterem Fall ist es möglich und ggf. sogar angezeigt, den Heißkanal-Anspritzpunkt erhaben bzgl. der umgebenden Spritzlingswandung aus Elastomerkunststoff herzustellen, jedoch letztlich versenkt bzgl. der Spritzlingswandung eines zweiten Teilbereichs aus einer anderen Kunststoffkomponente, insbesondere einer Hartkunststoffkomponente.

Der Gegenstand der Erfindung ist nachstehend anhand von zeichnerisch veranschaulichten Ausführungsbeispielen näher erläutert. Es zeigt:
- Fig. 1: einen im Kunststoff-Spritzverfahren hergestellten Verschlussstopfen in Seitenansicht, das erste Ausführungsbeispiel darstellend;
- Fig. 2: die Draufsicht hierzu;
- Fig. 3: die Unteransicht;
- Fig. 4: einen Vertikalschnitt durch eine Infusionsflasche mit zugeordnetem Verschlussstopfen, unter Aufbringen einer Bördelkappe gesichert;
- Fig. 5: einen Schnitt durch den Formnestbereich einer Spritzgießvorrichtung, unverfüllt;
- Fig. 6: eine gleiche Darstellung, jedoch bei verfülltem Formnest;
- Fig. 7: eine im Kunststoff-Spritzverfahren erzeugte Schutzkappe für eine Spritze, in Seitenansicht;
- Fig. 8: einen Vertikalschnitt durch die Schutzkappe, stark vergrößert, zusammen das zweite Ausführungsbeispiel verkörpernd;
- Fig. 9: in Seitenansicht einen dichtungsverschlossenen Behälter, wie er als Infusionsflasche Verwendung findet;
- Fig. 10: einen Querschnitt durch den Gegenstand gemäß Fig. 9, im Bereich der Verschlussvorrichtung, in einer ersten Ausführungsform;
- Fig. 11: eine Darstellung gemäß Fig. 10 einer zweiten Ausführungsform;
- Fig. 12: eine vergrößerte Querschnittsdarstellung des Anspritzbereiches bei bezüglich umgebender Spritzlingswandung in das Innere versetztem Nadelkopf;
- Fig. 13: eine Darstellung gemäß Fig. 6, jedoch mit gegenüber der umgebenden Spritzlingswandung nach außen versetztem Anspritzpunkt; und
- Fig. 14: eine Darstellung des Gegenstandes gemäß Fig. 11, wobei der Anspritzpunkt des Elastomerkunststoff-Teilbereiches gegenüber der umgebenden Spritzlingswandung erhaben ist und zugleich in einem weiteren Teilbereich des Spritzlings aufgenommen ist.

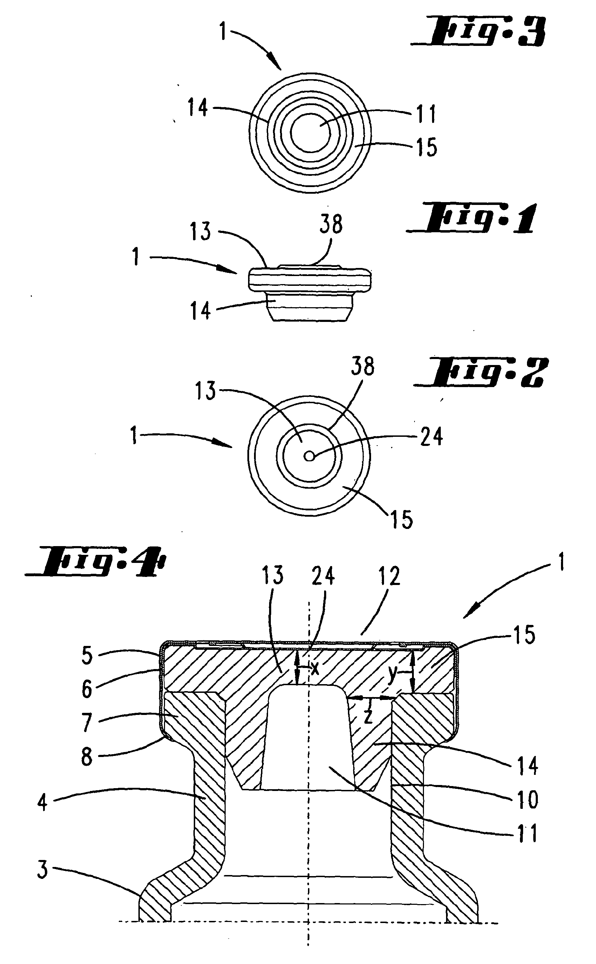

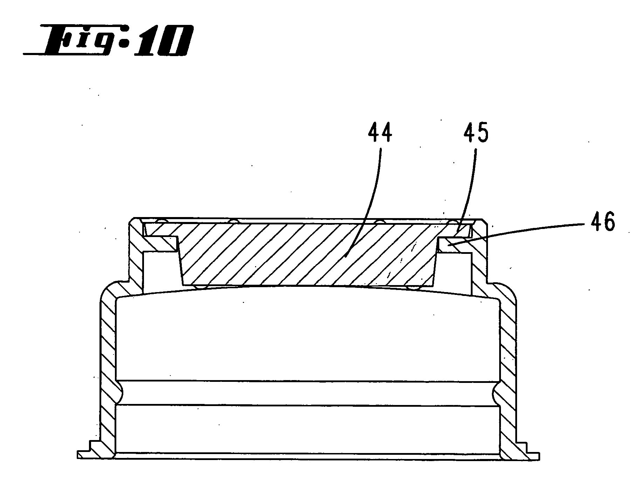

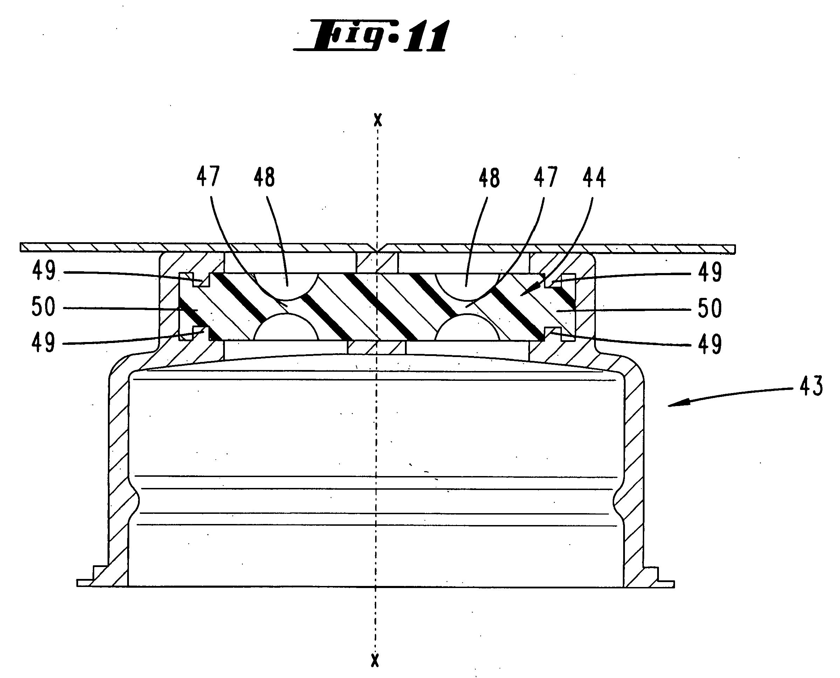

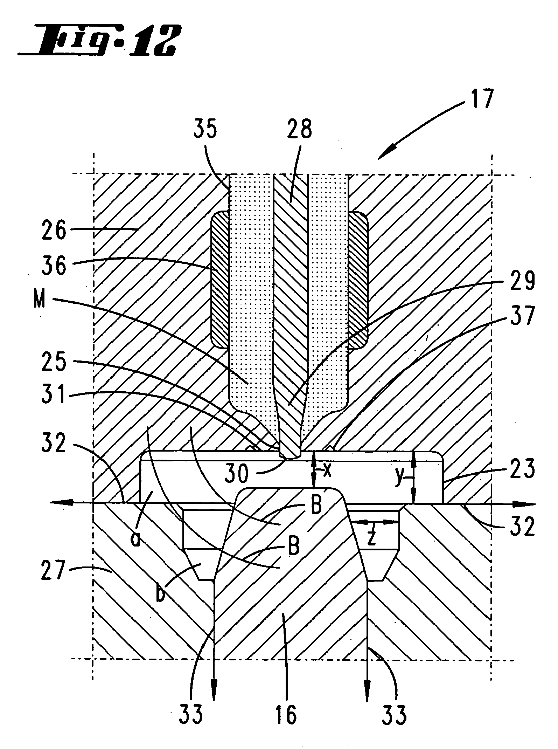

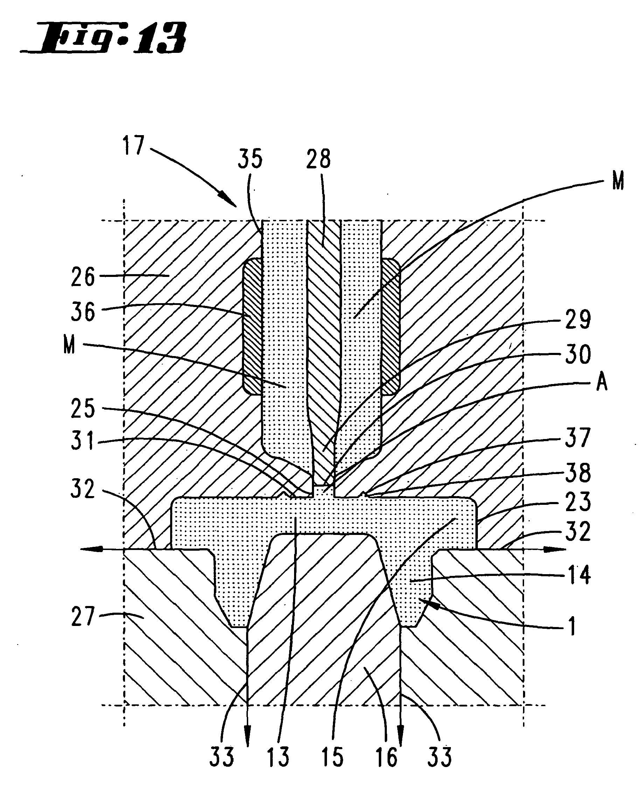

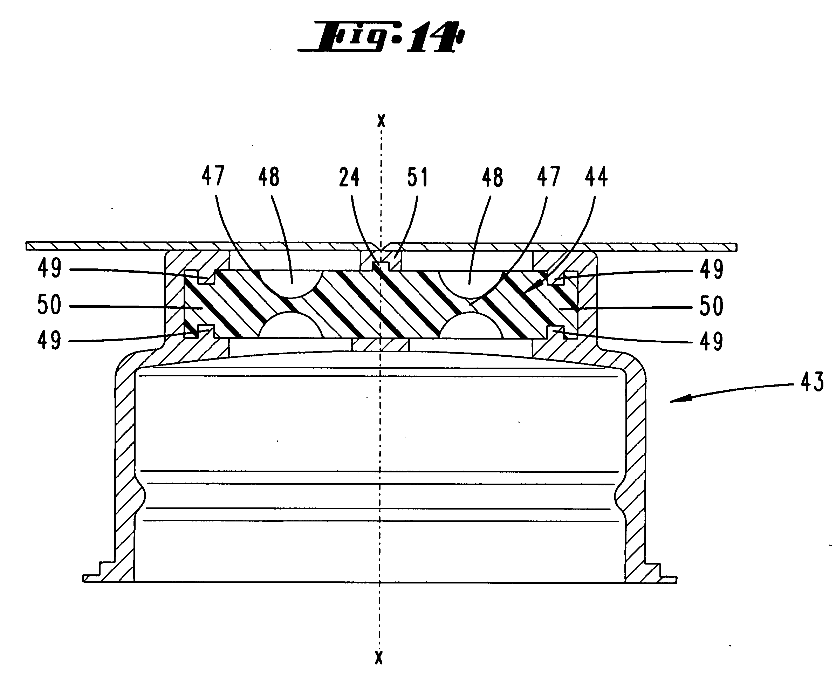

Der in Fig. 1 dargestellte Verschlussstopfen 1 und die in den Fig. 10 und 11 dargestellten Dichtungen 38, 39 und die in Fig. 7 wiedergegebene Schutzkappe 2 sind im Kunststoff-Spritzverfahren hergestellt.

Verwendung findet ein thermoplastischer Elastomer-Kunststoff in gummiartiger Elastizität und trotzdem ausreichender Eigensteifigkeit.

Der Verschlussstopfen 1 lässt sich inhaltschützend einer Flasche 3 zuordnen. Es handelt sich im pharmazeutischen Bereich einsetzbare Flasche 3, wie beispielsweise eine Infusionsflasche.

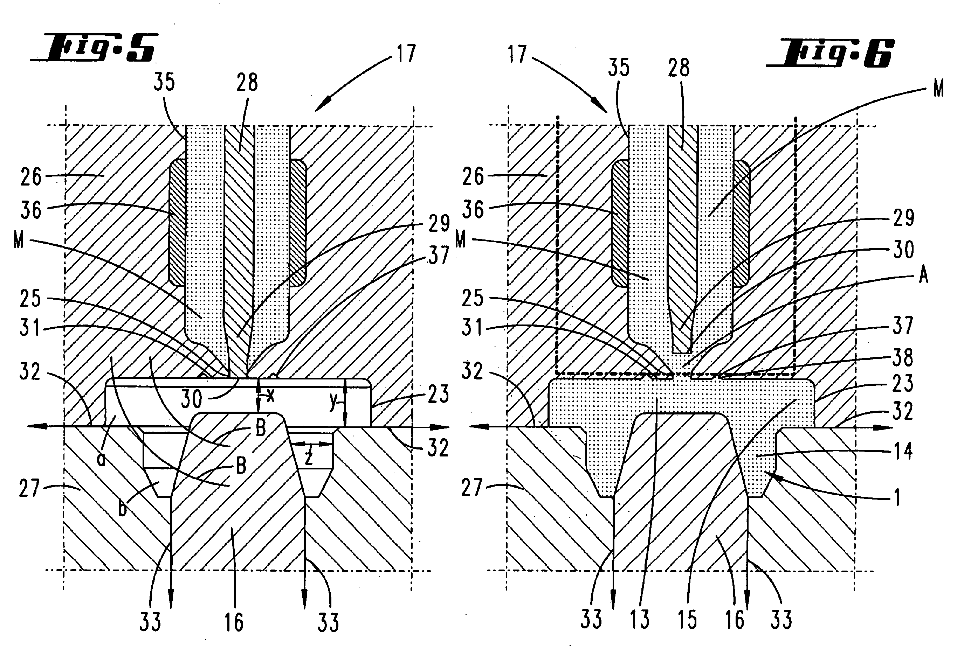

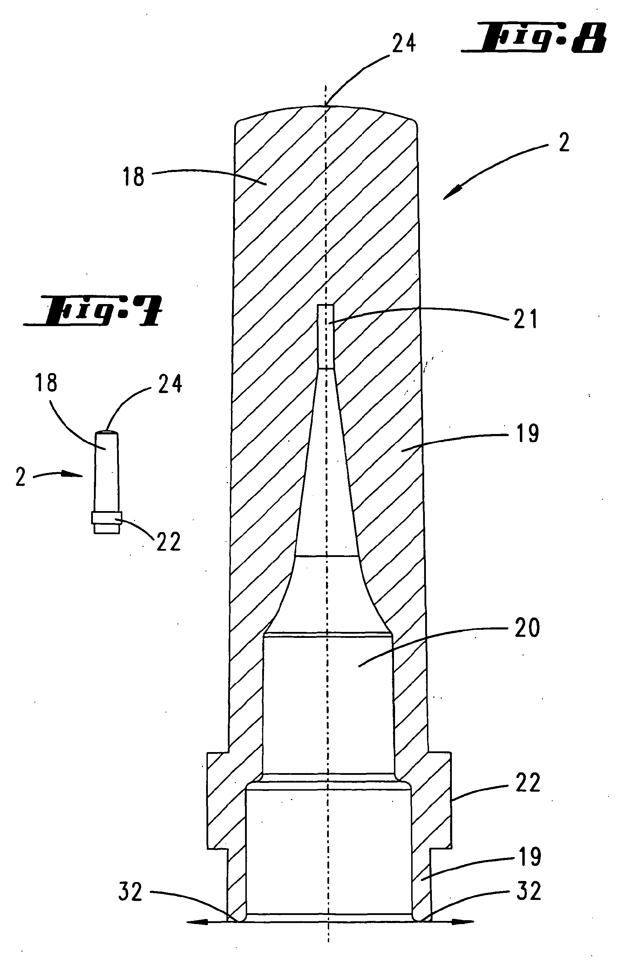

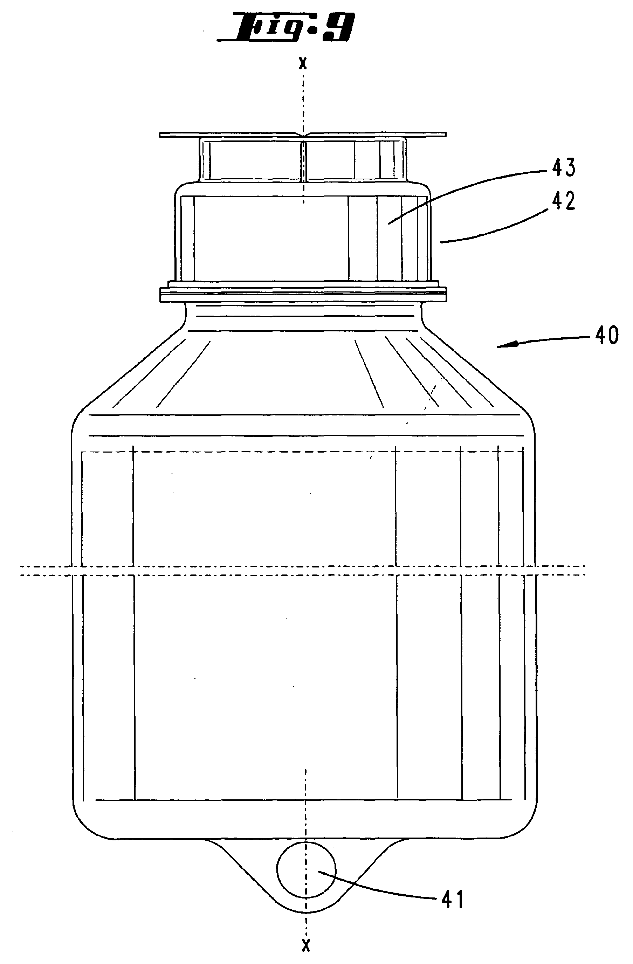

Die in Fig. 4 dargestellt Flasche 3 zeigt den Verschlussstopfen 1 dem Hals 4 der Flasche 3 zugeordnet, stopfengesichert durch eine metallische Bördelkappe 5. Die nimmt noch eine Innenkappe 6 auf. Die demgegenüber als Außenkappe zu bezeichnende Bördelkappe 5 ist, um einen Bund 7 des Flaschenhalses 4 gehend, angerollt. Die Bördelstelle trägt das Bezugszeichen 8.

Die Flasche 3 besteht beispielsweise aus Glas.

Der Verschlussstopfen 1 ist als Hohlstopfen realisiert. Der sitzt dichtend in einer im Wesentlichen zylindrischen Mündung 10 des Halses 4. Die zum Flascheninnenraum hin öffnende Höhlung des Hohlstopfens 9 trägt das Bezugszeichen 11.

Der Verschlussstopfen 1 ist als durchstechbarer Verschlusskörper realisiert. Hierzu wird der im Wesentlichen zentral liegende Durchstechbereich 12 des Verschlussstopfens 1 freigelegt. Diesbezügliche Einzelheiten ergeben sich aus der nicht vorveröffentlichten deutschen Patentanmeldung 100 05 833.

Den Durchstechbereich 12 stellt eine Stopfendecke 13, die sich flaschenseitig in einen Stopfenkragen 14 fortsetzt.

Beispielsweise aus Fig. 4 ist entnehmbar, dass die Stopfendecke 13 einen zentralen Bereich, stellend den Durchstechbereich 12, geringerer Wandungsstärke x und einen Randbereich 15 größerer Wandstärke y aufweist. Das Verhältnis von X : Y liegt bei 3 : 4 und in Fig. 5 eher bei 2 : 3 und stellt auf eine etwas geringere, zentrale Materialanhäufung ab, die das Durchstechverhalten begünstigt.

Unter Betrachtung der Verhältnisse beispielsweise in Fig. 5, wird deutlich, dass auch der Stopfenkragen zumindest in seinem Wurzelbereich zur Stopfendecke 13 hin eine größere Wandstärke z aufweist als die Stopfendecke 13 in ihrem zentralen Bereich, also Durchstechbereich 12.

Trotz dieser partiellen Unterschiede in den Wandstärken liegt insgesamt eine überwiegend dickwandige Ausbildung des Verschlussstopfens 1 vor. Dieser insgesamt dickfleischige Spritzling ist von guter Gebrauchsfestigkeit und auch stabil genug für den Auswerfer 16 der in den Fig. 5 und 6 partiell dargestellten Spritzgießvorrichtung 17.

Die in den Fig. 7 und 8 dargestellte Schutzkappe 2 für Spritzen im medizinischen Bereich ist wandungsmäßig unter Berücksichtigung anderer Schwerpunkte gestaltet. So weist der lange, außen zylindrische Körper einen Kappenhut 18 größerer Materialanhäufung auf, welcher Kappenhut sich in Längsrichtung in einen dünnwandigen Kappenhals 19 fortsetzt. Die die Kanüle schützend umgebende Wandung des Kappenhalses 19 ist innen gestuft gehöhlt; die entsprechende Höhlung 20 geht in eine engste Zone 21 über, ausgestaltet als Einstechzone zum Schutz und Zuhalten des dortigen Endes des Nadelkörpers.

Das Halsende weist die geringste Wandungsdicke auf. In diesem Bereich besitzt der mantelwandseitig im Wesentlichen zylindrisch gehaltene Spritzling einen auftragenden Ringbund 22.

Der Anspritzpunkt liegt an exponierter Stelle des Kappenhutes 18, nämlich an der Kappenhut-Spitze. Die recht dickwandige Decke ist flachkonvex verrundet.

In Fig. 9 ist eine Transfusionsflasche 40 dargestellt, die an ihrem Boden eine Öse 41 besitzt, zur stürzenden Anordnung der Transfusionsflasche 40. Der Flaschenkopf 42 weist dann nach unten.

Der Flaschenkörper besteht aus Kunststoff, beispielsweise PE in durchdringbarer Wandungsdicke. Bis zur Durchdringung mittels beispielsweise Kanülen oder Spikes.

Diese der Flasche 40 eigene Verschlusswand ist im Einzelnen nicht dargestellt. Der Verschlusswand übergestülpt ist eine Kappe 43, wie sie in den Fig. 10 und 11 in unterschiedlichen Ausführungsformen in Einzelheit dargestellt ist. Innerhalb der Kappe 43 ist ein Spritzling 44 angeordnet, der eine Dichtung darstellt. Die Dichtung ist durchstechbar und befindet sich der nicht dargestellten Verschlusswand der Flasche 40 vorgelagert. Die Dichtung 44 besitzt, beim Ausführungsbeispiel der Fig. 10, einen umlaufenden Flansch 45, der auf einem zugeordneten Flansch 46 der Kappe 43 aufliegt. Der Flansch 45 hat eine deutlich geringere Wandstärke als ein mittlerer Bereich der Dichtung 44.

Beim Ausführungsbeispiel der Fig. 11 besitzt die Dichtung 44 Durchstechbereiche 47, die dickenverkleinert sind. Von der Ober- und Unterseite ausgehend sind rückenzueinanderliegende, halbkugelförmige Mulden 48 ausgeformt. Die Mulden 48 führen im Bereich ihrer größten vertikalen Erstreckung dazu, dass die Dicke der Dichtung 44 auf etwa 1/5 gegenüber ihrer größten Dicke reduziert ist.

Beim Ausführungsbeispiel der Fig. 11 sind überdies noch umlaufend ober- und unterseitig der Dichtung 44, Nuten 49 vorgesehen, wo hingegen der Randbereich 50 wiederum eine vertikale Erstreckung aufweist, wie sie auch der Mittelbereich der Dichtung 44, in welchem bevorzugt an eine Außenfläche auch der Anspritzpunkt ist, aufweist.

Die Spritzlinge in Form des Verschlussstopfens 1, der Schutzkappe 2 und der Dichtungen 44 sind nicht nur jeweils im Kunststoff-Spritzverfahren erzeugt, sondern auch unter Verwendung gleichen Werkstoffes. Zur Anwendung kommt ein thermoplastischer Elastomerkunststoff (TPE). Der Werkstoff enthält eine Beimischung aus mineralischem Füllstoff. Der diesbezügliche Füllstoffanteil beträgt 30 % oder mehr. Zur Anwendung kommt als Füllstoff bevorzugt Magnesiumsilikat. Der mineralische Füllstoff hat gewisse fließbremsende Eigenschaft, so dass es zu einem Strömungszusammenhalt beim Befüllung des Formnestes 23 der Spritzgießvorrichtung 17 kommt. Anhand der Fig. 5 und 6 sind die spritztechnischen Besonderheiten, vorrangig am Beispiel als Verschlussstopfens, erläutert:

Der Anspritzpunkt A (vgl. etwa Fig. 6 und 13) der Heißkanal-Anspritzung ist an den Spritzling (vgl. bspw. Fig. 2, 4, 7, 8, 14) mit 24 bezeichnet. Er kann an der Schutzkappe 2 zentral liegen und liegt am Verschlussstopfen 1, wie auch bei den Dichtungen 44 bevorzugt zentral. Erreicht wird dadurch eine gleichmäßige Verteilung bei hoher Fließgeschwindigkeit. Ästhetische Fehler treten nicht auf. Selbst optische Unregelmäßigkeiten wie farbliche Abweichungen entfallen. Außerdem kann in gängigen Spritzgießformen gearbeitet werden. Dabei ist die Kavitätenfüllung weitgehend temperaturunabhängig. Sie kann zwischen 200 und 280°C, ohne dass sich größere Unterschiede in der Qualität abzeichnen würden.

Der zentrale Zugang der Spritzgießmasse M (vgl. Fig. 5, 6, dargestellt am Beispiel der Verspritzung eines Verschlussstopfens) erfolgt über eine Düse 25 eines Formoberteils 26. Das zugehörige Formunterteil ist mit 27 bezeichnet. Das Formnest 23 ist anteilig verteilt. Im Zentrum des Formunterteils 27 befindet sich ein vertikal bewegbarer Formvorsprung, gestellt durch den Auswerfer 16.

Die Füllgabe ist jeweils ventilkontrolliert. Hierzu befindet sich im Formoberteil 26 eine vertikal bewegbare Nadel 28. Deren Nadelkopf 29 tritt schließend in die Mündung der Düse 25 ein (vgl. Fig. 5).

Der stempelartige Nadelkopf 29 der Heißkanal-Anspritzung A weist eine ebenflächige Stirnfläche 30 auf. Die Stirnfläche erstreckt sich im Verschlusszustand der Heißkanalanspritzung A ebenengleich in die die Spritzlingswandung mitbildende, die Mündung der Düse 25 umgebende Düsenwandung 31. Die Spritzlingswandung kann die Oberseite der Stopfendecke 13 des Verschlussstopfens 1 sein oder die korrespondierende Oberfläche des Kappenhutes 18 der Schutzkappe 2 bzw. der Dichtung 38 oder 39 der Fig. 10 und 11.

Verweisend auf die Figuren 5 und 6 ist erkennbar, dass zwischen Formoberteil 26 und Formunterteil 27 eine horizontale Fuge besteht, bildend eine erste Luftabführung 32 bei eindringendem Spritzmaterial, der Spritzgießmasse M also. Eine zweite Luftabführung 33 besteht in vertikaler Richtung, und zwar in Form einer Ringfuge zwischen dem Auswerfer 16 und einer formpassenden Aufnahme des Formunterteils 27 für diesen. Hierdurch ist eine vollständige Befüllung des Formnestes 23 in der vorgesehenen Zeit erreicht, ohne dass an dem Spritzling außenseitig Markierungen wie Fließschlieren oder dergleichen entstehen. Das von der Düse 25 unter Druck ausgehende Material wird durch keine Sacköffnung unentlüftbar getrennt. Legt man den durch Bogenlinien B in Fig. 5 dargestellten Fließweg zugrunde, so würde ein Ausweichen aus den dargestellten Endzonen a und b an Luft nicht gehindert sein zufolge der beschriebenen Luftabführungen 32, 33. Bei den Gegenständen gemäß den Fig. 7 und 10 sind entsprechende Taschungen auch nicht möglich. Dort weicht die verdrängte Luft über die der ersten Luftabführung 32 entsprechende ab.

Beim Gegenstand der Fig. 11 kann es wieder günstig sein, mehrere derartige Luftabführungen werkzeugmäßig vorzunehmen.

Bezüglich der beschriebenen Spritzlinge ist auch werkstoffmäßig das Anforderungsprofil dahingehen beachtet, dass solche Spritzlinge autoklavbeständig sind. Sie ertragen Temperaturen von 120° über einen längeren Zeitraum. Trotz der erläuterten Beimischung bleibt der Werkstoff hervorragend spritzfähig. Es ist der erforderliche Kompromiss gefunden. Im Übrigen ist dem thermosplastischen Elastomerkunststoff auch noch Weichmacher beigegeben.

Die zentral in dem Spritzkanal 35 stehende Nadel 28 ist kanalwandungsseitig von einem Heizelement 36 umgeben.

Die Düsenwandung 31 des Formoberteils 26 weist im Falle des Verschlussstopfens 1 oder einer Dichtung 44 eine Ringnut 37 auf. Die Ringnut verläuft konzentrisch zur Düse 25, ist dreieckigen Querschnitts und formt auf der Oberseite der Stopfendecke 13 gleichsam einen Zielring 38 aus für das korrekte Ansetzen der Kanüle oder eines Spikes.

Zufolge der geschilderten Ebenflächigkeit der Stirnfläche 30 der Nadel 28 kommt es nach dem Entformen zu einem glatten Abtrennen der Nadel, d.h., ohne einen rauen, sandstrukturartigen Abdruck zu hinterlassen. Insoweit werden auch keine abragenden Partikel bei Ingebrauchnahme durch die Kanüle in das Innere der Flasche 3 eingetragen. Der in Fig. 2 dargestellte Abdruck ist einerseits nur zeichnerisch hervorgehoben. Andererseits kann sich ein solcher Abdruck auch ergeben, wenn entsprechend Fig. 12 vorgegangen wird. Hier überragt im Verschlusszustand die Stirnfläche 30 der Nadel 28 die umgebende Düsenwandung. Entsprechend ist an dem Spritzling der Anspritzbereich in das Innere des Spritzlings versetzt ausgebildet. Die Versetzung in das Innere kann beispielsweise bei einem Nadeldurchmesser von 1,5 mm insgesamt 0,3 mm betragen. Hierbei kann die Nadelspitze auch im Einzelnen zunächst zylindrisch und dann mit einer balligen Stirnfläche ausgebildet sein, wobei der zylindrische Bereich beispielsweise 0,05 mm und der ballige Stirnflächenbereich weitere 0,3 mm in das Innere des Spritzlings versetzt sein kann. Trotzdem bleibt es aber bei der glatten, auch ziehfadenfreien Ablösung.

Übliche Entformungsschrägen am Spritzling sind berücksichtigt.

In Fig. 13 ist eine Darstellung gemäß Fig. 6 wiedergegeben, bei welcher der Anspritzpunkt A des Spritzlings, hier des Verschlussstopfens 13, gegenüber der umgebenden Spritzlingswandung nach außen versetzt gebildet ist. Ersichtlich ist der Nadelkopf 29 hier im Verschlusszustand bzgl. der umgebenden Düse 25 soweit zurückgezogen, dass sich ein innerhalb der Düse 25 verbleibender zylindrischer Ansatz des Spritzlings 13 ergibt.

Bei der Ausführungsform der Fig. 14 ist der Gegenstand gemäß Fig. 11 im Zweikomponenten-Spritzverfahren hergestellt, wobei der Anspritzpunkt 24 gegenüber der umgebenden Spritzlingswandung nach außen versetzt geformt ist, entsprechend einer formtechnischen Gestaltung gemäß Fig. 13. Nachfolgend zu dem hier als Dichtung 44 ausgebildeten Spritzling aus Elastomerkunststoff ist die umgebende Kappe 44 einschließlich eines, hier als Steg 51 ausgebildeten Kappenteiles gespritzt worden, das den Anspritzpunkt 24 überfängt. Das Merkmal, dass der Anspritzpunkt 24 des Teilbereichs des (Gesamt-) Spritzlings, bei Herstellung im Zweikomponenten-Spritzverfahren, der aus thermoplastischem Elastomerkunststoff besteht, von dem weiteren Teilbereich des Spritzlings aus Kunststoff zweiter Komponente überfangen ist, hat auch unabhängig davon Bedeutung, wie der Anspritzpunkt 24 ausgebildet ist.

## Patentansprüche

1. Für pharmazeutische Anwendungen dienender Spritzling wie Verschlussstopfen (1) für pharmazeutische Flaschen, Schutzkappe (2) für medizinische Spritzen oder Dichtungselement (44) für pharmazeutische Behälter, wobei der Spritzling (1, 2, 44) zumindest in einem Teilbereich aus einem thermoplastischen Elastomerkunststoff mit einem mineralischen Füllstoffanteil von 30 % oder mehr besteht und dieser Teilbereich einen Heißkanal-Anspritzpunkt aufweist, der als glattflächiger Abdruck gebildet ist.

2. Spritzling nach Anspruch 1, **dadurch gekennzeichnet, dass** der Teilbereich von einem zweiten Teil des Spritzlings, bestehend aus einem anderen Kunststoff, überspritzt ist.

3. Spritzling nach Anspruch 1, **dadurch gekennzeichnet, dass** der Spritzling insgesamt aus dem Elastomerkunststoff besteht.

4. Spritzling nach einem der vorhergehenden Ansprüche, **dadurch gekennzeichnet, dass** der Heißkanal-Anspritzpunkt ohne Versetzung nach außen in die umgebende Spritzlingswandung übergeht.

5. Spritzling nach einem der Ansprüche 1 bis 4, **dadurch gekennzeichnet, dass** ein bzgl. der umgebenden Spritzlingswandung nach außen versetzter Heißkanal-Anspritzpunkt von einem Kunststoffteil überfangen ist.

6. Spritzling nach einem der Ansprüche 1 bis 4, **dadurch gekennzeichnet, dass** der glattflächige Abdruck des Heißkanal-Anspritzpunktes ebenengleich in die ihn umgebende Spritzlingswandung übergeht.

7. Spritzling nach einem der Ansprüche 1 bis 6, **dadurch gekennzeichnet, dass** der Spritzling überwiegend dickwandig ausgebildet ist.

8. Spritzling nach einem der Ansprüche 1 bis 7, **dadurch gekennzeichnet, dass** im Falle des Verschlussstopfens (1) eine Stopfendecke (13) und ein Stopfenkragen (14) ausgebildet ist und dass eine zentrale Heißkanal-Anspritzung (A) im Bereich der Stopfendecke (13) gegeben ist.

9. Spritzling nach Anspruch 8, **dadurch gekennzeichnet, dass** im Falle des Verschlussstopfens (1) die Stopfendecke (13) einen zentralen Bereich (12) geringerer Wandstärke (x) und einen Randbereich (15) größerer Wandstärke (y) aufweist.

10. Spritzling nach einem der Ansprüche 1 bis 7, **dadurch gekennzeichnet, dass** eine Ausbildung als Schutzkappe (2) für medizinische Spritzen gegeben ist und dass die Schutzkappe (2) eine Heißkanal-Anspritzung (A) im Bereich des Kappenhutes (18) aufweist.

11. Spritzling nach einem der Ansprüche 1 bis 10, **dadurch gekennzeichnet, dass** der thermoplastische Elastomerkunststoff einen Anteil an Weichmachern enthält.

12. Spritzling nach Anspruch 11 oder einem der Ansprüche 1 bis 7, **gekennzeichnet durch** eine Ausbildung als Dichtungselement (44) für eine pharmazeutische Flasche, wobei eine zentrale Heißkanal-Anspritzung (A) in einer Außenfläche vorgesehen ist.

13. Spritzling nach einem der Ansprüche 1 bis 9 oder 11, **dadurch gekennzeichnet, dass** im Falle eines Verschlussstopfens (1) der Stopfenkragen (14) eine größere Wandstärke (z) aufweist als die Stopfendecke (13) in ihrem zentralen Bereich.

## Claims

1. A moulding serving for pharmaceutical uses, such as a stopper (1) for pharmaceutical bottles, a protective cap (2) for medical syringes or a sealing element (44) for pharmaceutical containers, the moulding (1, 2, 44) consisting, at least in a subregion, of a thermoplastic elastomer material with a mineral filler content of 30% or more and this subregion having a hot-runner injection point which is formed as a smooth-surfaced mark.

2. A moulding according to Claim 1, **characterized in that** the subregion is injected over by a second part of the moulding, consisting of another plastics.

3. A moulding according to Claim 1, **characterized in that** the moulding altogether consists of the elastomer material.

4. A moulding according to one of the preceding claims, **characterized in that** the hot-runner injection point goes over into the surrounding moulding wall without being offset outwards.

5. A moulding according to one of Claims 1 to 4, **characterized in that** a hot-runner injection point offset outwards with respect to the surrounding moulding wall is encapsulated by a plastics part.

6. A moulding according to one of Claims 1 to 4, **characterized in that** the smooth-surfaced mark of the hot-runner injection point goes over into the moulding wall surrounding it in a co-planar manner.

7. A moulding according to one of Claims 1 to 6, **characterized in that** the moulding is of a predominantly thick-walled form.

8. A moulding according to one of Claims 1 to 7, **characterized in that**, in the case of the stopper (1), a stopper top (13) and a stopper collar (14) is formed and **in that** there is a central hot-runner injection (A) in the region of the stopper top (13).

9. A moulding according to Claim 8, **characterized in that**, in the case of the stopper (1), the stopper top (13) has a central region (12) of smaller wall thickness (x) and an edge region (15) of greater wall thickness (y).

10. A moulding according to one of Claims 1 to 7, **characterized in that** it takes the form of a protective cap (2) for medical syringes and **in that** the protective cap (2) has a hot-runner injection (A) in the region of the cap hat (18).

11. A moulding according to one of Claims 1 to 10, **characterized in that** the thermoplastic elastomer material contains a proportion of plasticizers.

12. A moulding according to Claim 11 or one of Claims 1 to 7, **characterized by** being formed as a sealing element (44) for a pharmaceutical bottle, a central hot-runner injection (A) being provided in an outer surface.

13. A moulding according to one of Claims 1 to 9 or 11, **characterized in that**, in the case of a stopper (1), the stopper collar (14) has a greater wall thickness (z) than the stopper top (13) in its central region.

## Revendications

1. Objet moulé par injection servant à des applications pharmaceutiques telles que des bouchons de fermeture (1) pour des flacons pharmaceutiques, des capuchons de protection (2) pour des seringues médicinales ou des éléments d'étanchéité (44) pour des récipients pharmaceutiques, dans lequel l'objet moulé par injection (1, 2, 44) est composé, au moins dans une zone partielle, d'une matière synthétique élastomère thermoplastique présentant une proportion de matériau minéral de remplissage ou de charge de 30 % ou plus et cette zone partielle comporte un point d'injection à canal chaud qui est réalisé comme une empreinte plane et lisse.

2. Objet moulé par injection selon la revendication 1, **caractérisé en ce que** la zone partielle d'une deuxième partie de l'objet moulé est réalisée en une autre matière synthétique ou plastique, et surmoulée par injection.

3. Objet moulé par injection selon la revendication 1, **caractérisé en ce que** l'objet moulé par injection se compose globalement de la matière synthétique élastomère.

4. Objet moulé par injection selon l'une des revendications précédentes, **caractérisé en ce que** le point d'injection à canal chaud se prolonge sans décalage vers l'extérieur dans la paroi environnante de l'objet moulé par injection.

5. Objet moulé par injection selon l'une des revendications 1 à 4, **caractérisé en ce qu'**un point d'injection à canal chaud décalé vers l'extérieur par rapport à la paroi environnante de l'objet moulé par injection, est recouvert par une partie en matière synthétique.

6. Objet moulé par injection selon l'une des revendications 1 à 4, **caractérisé en ce que** l'empreinte plate et lisse du point d'injection à canal chaud se prolonge au même niveau dans la paroi de l'objet moulé par injection qui l'entoure.

7. Objet moulé par injection selon l'une des revendications 1 à 6, **caractérisé en ce que** l'objet moulé par injection est réalisé principalement avec des parois épaisses.

8. Objet moulé par injection selon l'une des revendications 1 à 7, **caractérisé en ce que**, dans le cas du bouchon de fermeture (1) sont formées une couverture (13) de bouchon et une collerette (14) de bouchon, et **en ce qu'**une injection centrale (A) à canal chaud est établie dans la zone de la couverture (13) de bouchon.

9. Objet moulé par injection selon la revendication 8, **caractérisé en ce que**, dans le cas du bouchon de fermeture (1), la couverture (13) de bouchon présente une zone centrale (12) de plus faible épaisseur de paroi (x) et une zone de bordure (15) de plus grande épaisseur de paroi (y).

10. Objet moulé par injection selon l'une des revendications 1 à 7, **caractérisé en ce qu'**un mode de réalisation est proposé comme capuchon de protection (2) pour des seringues à usage médical et **en ce que** le capuchon de protection (2) comporte une injection (A) à canal chaud dans la zone du chapeau (18) de capuchon.

11. Objet moulé par injection selon l'une des revendications 1 à 10, **caractérisé en ce que** la matière synthétique élastomère thermoplastique contient une certaine proportion d'un plastifiant.

12. Objet moulé par injection selon la revendication 11 ou l'une des revendications 1 à 7, **caractérisé par** un mode de réalisation comme élément d'étanchéité (44) pour un flacon à usage pharmaceutique, dans lequel est prévue une injection (A) à canal chaud sur une surface extérieure.

13. Objet moulé par injection selon l'une des revendications 1 à 9 ou 11, **caractérisé en ce que**, dans le cas d'un bouchon de fermeture (1), la collerette (14) de bouchon présente une plus grande épaisseur de paroi (z) que la couverture (13) de bouchon dans sa zone centrale.
